# EUROPÄISCHE PATENTANMELDUNG

(11) **EP 1 313 030 A2**
(43) Veröffentlichungstag der Anmeldung: **21.05.2003**
(21) Anmeldenummer: 02022331.9
(22) Anmeldetag: 08.10.2002
(51) Int. Cl.: G06F 17/15

(54) **Verfahren zur Ermittlung eines komplexen Korrelationsmusters aus Verfahrens- und Anlagendaten**

(30) Priorität: 17.10.2001 DE 10151250
(71) Anmelder: Bayer Aktiengesellschaft, 51368 Leverkusen (DE)
(72) Erfinder: Lohmann, Bernd, Dr., 51467 Bergisch Gladbach (DE); Schuppert, Andreas, Dr., 51515 Kürten (DE); Kämpfer, Jens, 51067 Köln (DE); Warncke, Michael, Dr., 50935 Köln (DE)

(57) **Zusammenfassung**

Die Erfindung betrifft ein Verfahren zur Ermittlung eines komplexen Korrelationsmusters aus Verfahrens- und Anlagendaten , vorzugsweise aus einem Verfahrenstechnische Datenbank, mit folgenden Schritten:
- Spezifizierung einer Matrix, in der jedes Matrixelement einem Element einer Anlage und einer entsprechenden Eigenschaft zugeordnet ist,
- Generierung der Matrix durch eine Datenbankabfrage,
- Automatische Erkennung eines komplexen Korrelationsmusters in der Matrix.

## Beschreibung

Die Erfindung betrifft ein Verfahren zur Ermittlung eines komplexen Korrelationsmusters aus Verfahrens- und Anlagendaten sowie ein entsprechendes Computersystem und Computerprogrammprodukt.

Aus dem Stand der Technik sind verschiedene Verfahren zur Verarbeitung und Visualisierung komplexer Informationen hinsichtlich eines Herstellungsprozesses, insbesondere eines verfahrenstechnischen Prozesses, bekannt. Dabei werden diese Informationen im Allgemeinen in Datenbanken, z. B. Data Warehouse Datenbanken, gespeichert.

Aus US-A-6 243 615 ist ein System zur Analysierung und Verbesserung pharmazeutischer und anderer kapitalintensiver Herstellungsverfahren bekannt. Dabei dient. ein statistisches Softwaretool zur Identifizierung der Ursache einer unzureichenden Produktqualität.

Aus US-A-5 768 133 ist die Verwendung eines Data Warehouse Computersystems für die Steuerung einer Halbleiterfabrikation bekannt. Die den Ablauf der Halbleiterherstellung betreffenden Daten werden in einer zentralen Data Warehouse Datenbank abgelegt und entsprechend ausgewertet. Auf die Data Warehouse Datenbank kann interaktiv über eine graphische Nutzerschnittstelle zugegriffen werden.

Aus US-A-5 721 903 ist ein System zur Generierung eines Reports aus einer Data Warehouse Computerdatenbank bekannt. Dazu werden Nutzerabfragen von einem Sub-System interpretiert und auf eine Structured Querry Language (SQL) Abfrage abgebildet. Durch eine entsprechende Datenbankabfrage wird einem Benutzer damit eine Entscheidungshilfe hinsichtlich geschäftlicher Abläufe gegeben, ohne dass der Benutzer die Details der Datenbank kennen muss.

Für den sogenannten "Decision Support" sind OLAP (Online Analytical Processing) Datenbanken bekannt, die insbesondere auch eine multivariante Datenanalyse erlauben. Solche Datenbanken sind beispielsweise aus US-A-6 2058 447, US-A- 6 122 636, US-A-5 974 788, US-A- 5 940 818 und US-A- 5 926 818 bekannt.

Ferner sind aus dem Stand der Technik sog. verfahrenstechnische Datenmodelle und verfahrenstechnische Entwicklungsumgebungen bekannt, vgl. B. Bayer, R. Schneider, W. Marquardt, "A Conceptual Framework for Product Data Models", VDI/VDE-Gesellschaft Mess- und Automatisierungstechnik (Eds.): "Automatisierungstechnik im Spannungsfeld neuer Technologien", VDI-Berichte 1608, VDI-Verlag, 2001,681-688 und R. Bogusch, B. Lohmann, W. Marquardt: Computer-Aided Process Modeling with MODKIT, Abstract abrufbar unter http://www.lfpt.rwth-aachen.de/Publication/Techreport/.

Der Erfindung liegt die Aufgabe zu Grunde ein Verfahren zur Ermittlung eines komplexen Korrelationsmusters aus Verfahrens- und Anlagendaten sowie ein entsprechendes Computersystem und Computerprogrammprodukt zu schaffen.

Die der Erfindung zu Grunde liegende Aufgabe wird mit den Merkmalen der unabhängigen Patentansprüche jeweils gelöst.

Bevorzugte Ausführungsformen der Erfindung sind in den abhängigen Patentansprüchen angegeben.

Die Erfindung erlaubt die Erkennung von komplexen Korrelationsmustern in Verfahrens- und Anlagendaten, beispielsweise den Daten einer oder mehrerer chemischer Fabrikationsanlagen, mittels eines automatischen Verfahrens. Dazu wird zunächst eine nutzerdefinierte Matrix spezifiziert, in der jedes Matrixelement einem bestimmten Verfahren und einer bestimmten Anlage sowie einer entsprechenden Eigenschaft zugeordnet ist. Die Zuordnung kann dabei beispielsweise zu unterschiedlichen Apparaten der selben Anlage oder zu einander entsprechenden Apparaten unterschiedlicher Anlagen sowie zu einer physikalischen Eigenschaft wie z.B. Druck, Temperatur und Konzentration erfolgen. Bei der Matrix kann es sich um eine Kreuzmatrix beliebiger Dimension handeln.

Neben physikalischen Eigenschaften können auch betriebswirtschaftliche Eigenschaften, insbesondere Kosten, sowie Qualitätseigenschaften zugeordnet werden. Die Auswahl der Eigenschaften und der Anlagenelemente richtet sich dabei jeweils nach dem gemäß der Fragestellung des Benutzers relevanten Datenaspekt.

In einer bevorzugten Ausführungsform der Erfindung liegt dem Data Warehouse ein objektorientiertes Datenmodell zu Grunde, welches insbesondere die Objekte Projekte, Projektvarianten, Simulationen, Implementierungen, Stoffdaten und/oder Designdaten miteinander verknüpft.

Vorzugsweise ist die Datenbank auf einem Servercomputer gespeichert, auf den von einen Client-Computer zugegriffen wird. Ein Explorer Programm des Client-Computers kann dazu verwendet werden, die für die Generierung der Matrix erforderlichen Daten aus der Datenbank abzufragen und in einem Speicher des Client-Computers abzulegen. Durch zyklischen Abfragen der Daten durch den Explorer kann auch eine dynamische Aktualisierung erfolgen.

Für die automatische Erkennung von komplexen Korrelationsmustern in der Matrix können erfindungsgemäß unterschiedliche Verfahren zur Anwendung kommen. Hierfür eigenen sich beispielsweise Cluster-Verfahren, Decision-Trees, Untergruppen-Suche, Fuzzy-Logic und Rough-Sets Verfahren.

Aus US-A- 6 112 194, US-A- 6 115 708, US-A- 6 100 901 und US-A-5 857 179 sind Cluster-Verfahren, insbesondere für Data-Mining Anwendungen bekannt. Solche und andere Cluster-Verfahren können für die Identifizierung von komplexen Korrelationsmustern in einem erfindungsgemäßen Verfahren angewendet werden.

Im Weiteren wird ein bevorzugtes Ausführungsbeispiel der Erfindung mit Bezugnahme auf die Zeichnungen näher erläutert. Es zeigen
- Figur 1: ein Flussdiagramm einer Ausführungsform des erfindungsgemäßen Verfahrens,
- Figur 2: ein Beispiel für eine Kreuzmatrix,
- Figur 3: ein Blockdiagramm für eine Ausführungsform eines erfindungsgemäßen Computersystems,
- Figur 4: eine beispielhafte Struktur eines Projekts einer Verfahrenstechnische Datenbank,
- Figur 5: eine Nutzerschnittstelle eines Explorer Programms,
- Figur 6: ein Dialogfenster zur Bearbeitung von Apparatedaten,
- Figur 7: ein Blockdiagramm einer Anlage mit verschiedenen Teilanlagen zur Herstellung eines chemischen Produkts,
- Figur 8: einen Ausschnitt der Struktur eines entsprechenden Projekts,
- Figur 9: eine Kreuzmatrix für eine Korrelations- und Regelanalyse hinsichtlich des Beispiels der Figur 8,
- Figur 10: die grafische Darstellung der aufgefundenen Zusammenhänge,
- Figur 11: die textuelle Ausgabe der aufgefundenen Zusammenhänge,
- Figur 12: die grafische Darstellung der hinsichtlich der Verfahrensvariante 2 aufgefundenen Zusammenhänge,
- Figur 13: die textuelle Ausgabe der hinsichtlich der Verfahrensvariante 2 aufgefundenen Zusammenhänge.
- Figur 14: eine Übersichtsdarstellung des Verfahrensablaufs.

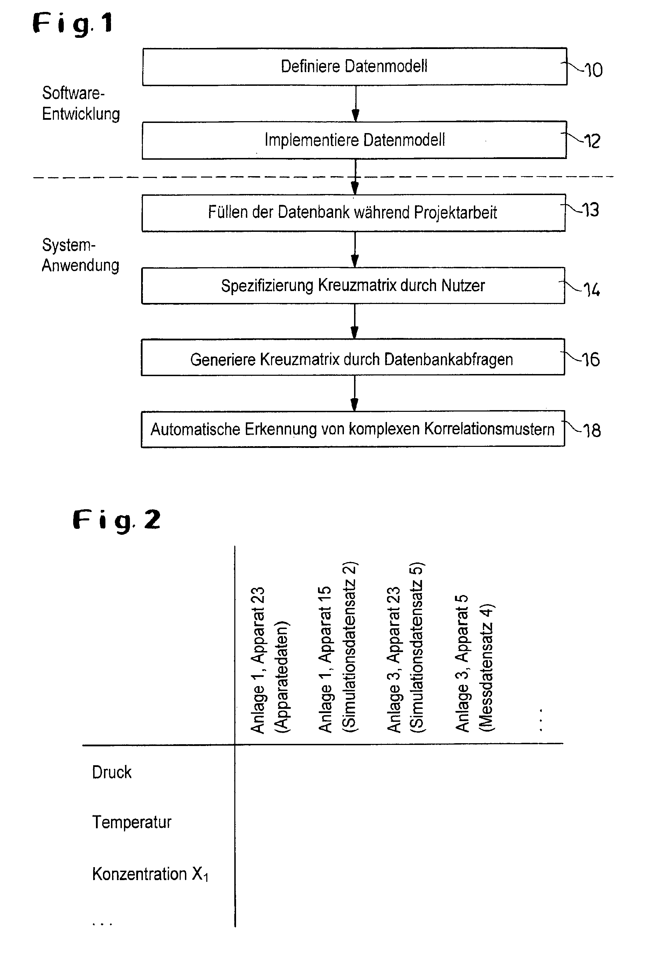

Gemäß dem Flussdiagramm der Figur 1 wird in dem Schritt 10 zunächst ein Datenmodell, beispielsweise ein objektorientiertes Daterimodell, der betreffenden Anlage oder der betreffenden Gruppe von Anlagen erstellt. Bei den Anlagen kann es sich beispielsweise um chemische Fabrikationsanlagen für ein bestimmtes Produkt handeln, die entweder bereits existent sind oder für die Planungsdaten (z.B. Simulationsdaten, Apparatedaten, Fliessbilder, etc.) vorliegen oder erzeugt werden können.

Ferner kann es sich bei dem Datenmodell auch um die Abbildung unterschiedlicher Verfahrensvarianten zur Herstellung des selben chemischen Produkts auf derselben Anlage handeln.

In dem Schritt 12 wird basierend auf dem in dem Schritt 10 definierten Datenmodell eine Datenbank implementiert. Diese Datenbank wird dann in dem Schritt 13 mit Daten gefüllt. Hierzu werden beispielsweise messtechnisch ermittelte Daten, Konstruktions- und/oder Simulationsdaten verwendet. Danach steht diese Datenbank für Anwendungen eines Nutzers zur Verfügung:

In dem Schritt 14 wird durch einen Nutzer eine Matrix spezifiziert, um in der Datenbank beinhaltete Größen je nach der Fragestelle des Nutzers miteinander zu verknüpfen. Eine solche Matrix kann zwei oder höherdimensional sein, z. B. kann ein zeitlicher Verlauf als dritte Dimension gewählt werden. In der Figur 2 ist ein Beispiel für eine solche Kreuzmatrix dargestellt, die noch näher erläutert werden wird.

In dem Schritt 16 wird die in dem Schritt 14 spezifizierte Matrix mit Daten gefüllt, indem für die einzelnen Matrixelemente der Matrix eine Datenbankabfrage erfolgt.

Die in dem Schritt 16 generierte Matrix ist die Grundlage für die weitere Auswertung.

In dem Schritt 18 wird ein Verfahren zur Ermittlung eines komplexen Korrelationsmusters auf die Matrix angewendet. Hierbei kann es sich beispielsweise um ein Cluster-Verfahren oder ein anderes statistisches oder Muster-Erkennungsverfahren handeln. Dabei werden Zusammenhänge zwischen den Daten der Matrix ermittelt und beispielsweise als Regeln ausgegeben.

Die Figur 2 zeigt ein Beispiel für eine solche Matrix. Die Matrix verknüpft die physikalischen Größen Druck, Temperatur und Konzentration mit unterschiedlichen Apparaten verschiedener Anlagen; in dem gezeigten Beispiel sind dies der Apparat 23 der Anlage 1, Apparat 15 der Anlage 1, Apparat 23 der Anlage 3 und Apparat 5 der Anlage 3. Dabei ist in der Matrix weiter spezifiziert, um welche Art von Daten es sich jeweils handelt.

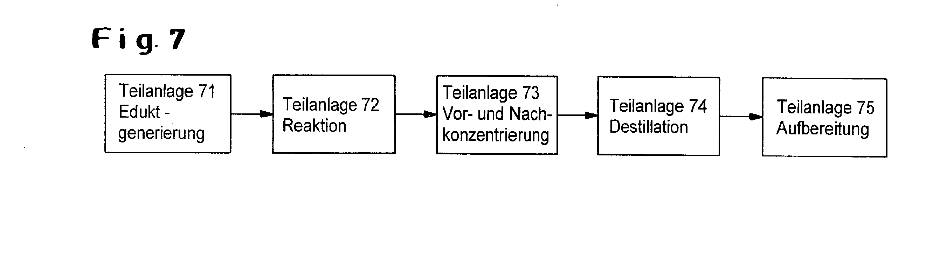

So handelt es sich im Fall von Apparat 23 der Anlage 1 um Apparatedaten, die einem gespeicherten Apparatedatenblatt (vgl. Figur 7) aus der Datenbank entnommen werden können. Bei den entsprechenden Daten für den Apparat 15 der Anlage 1 handelt es sich dagegen um Daten, die durch eine Simulation berechnet worden sind - in dem gezeigten Beispiel um einen Simulationsdatensatz 2.

Entsprechend verhält es sich für die Daten für den Apparat 23 der Anlage 3, die durch einen Simulationsdatensatz 5 gegeben sind. Die Daten für den Apparat 5 der Anlage 3 werden schließlich durch Messung ermittelt und sind aus einem Messdatensatz 4 abrufbar.

Mit Hilfe einer solchen Matrix lassen sich also einzelne Simulationsdaten eines Simulationsdatensatzes zu einzelnen Apparatedaten und Messdaten in Beziehung setzen. Dabei können erforderlichenfalls auch die notwendigen Umrechnungsformeln mit abgebildet werden.

Analog können auch Messdaten zu Simulationsdaten und Apparatedaten in Beziehung gesetzt werden. Dies kann durch eine manuelle Zuordnung durch einen Benutzer erfolgen. Alternativ oder zusätzlich können dem Benutzer auch ein oder mehrere alternative vorgegebene Beziehungen zur Spezifizierung einer Matrix zur Auswahl angeboten werden.

Von besonderem Vorteil ist dabei, dass Design- und Simulationsstudien sowohl untereinander als auch mit Apparatedaten verglichen werden können. So lassen sich sowohl bereits existierende als auch in Planung befindliche Anlagen miteinander vergleichen sowie auch existierende Anlagen mit nur als Simulation vorliegenden Anlagen.

Ferner können unterschiedliche Verfahren zur Herstellung desselben Produkts miteinander verglichen werden, in dem beispielsweise die Verfahrensdaten bei Durchführung der unterschiedlichen Verfahren auf derselben Anlage oder ähnlichen Anlagen miteinander verglichen werden.

Ferner ist auf diese Art und Weise ein Vergleich von Simulations-, Mess- und Apparatedatensätzen möglich, und zwar innerhalb einer Datensatzgruppe als auch Zwischendatensatzgruppen.

In vorteilhafter Weise kann die Spezifizierung einer Matrix in einer sogenannten Spread Sheet erfolgen, wobei der Anwender die Zeilen- und Spalten selber definieren kann. Nachdem eine solche Spezifizierung einer Matrix einmal vorgenommen worden ist, kann diese als Vorlage für eine spätere Wiederverwendung in einem anderem Kontext abgespeichert werden.

Nach Generierung der Matrix durch eine Datenbankabfrage kann eine dynamische Aktualisierung der Matrix beispielsweise durch zyklisch wiederholte Datenbankabfragen erfolgen.

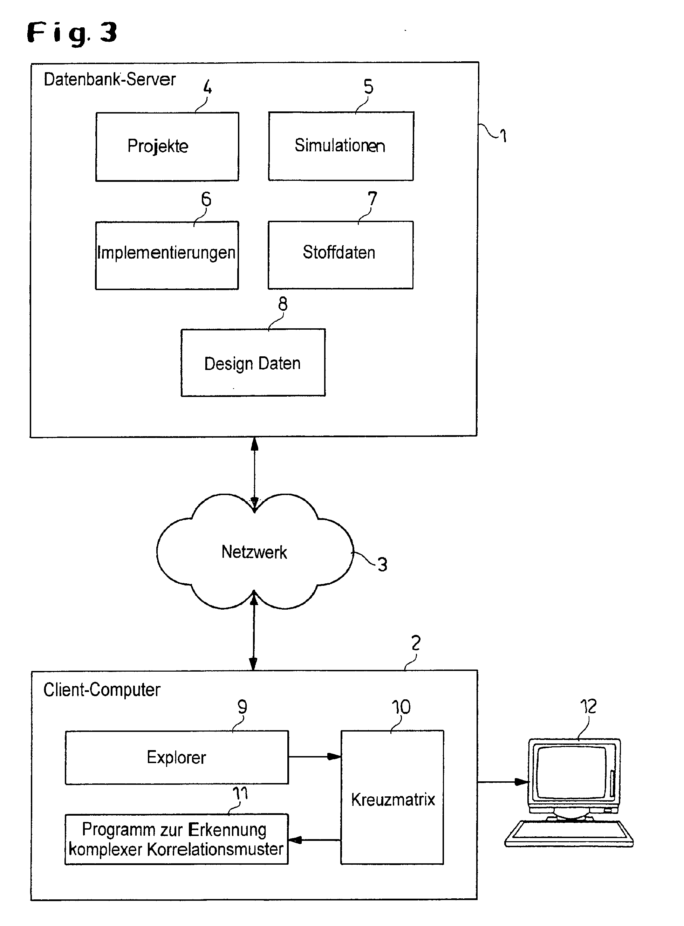

Die Figur 3 zeigt ein Blockdiagramm eines Computersystems mit einem Datenbankserver 1 und einem Clientcomputer 2, die über ein Netzwerk 3 verbunden sind.

Der Datenbank-Server 1 beinhaltet eine Datenbank mit Verfahrens- und Anlagendaten. Der Datenbank liegt ein objektorientiertes Datenmodell mit den folgenden Objekten zu Grunde: Projekte 4, Simulationen 5, Implementierung 6, Stoffdaten 7 und Designdaten 8. Dadurch ist eine verfahrenstechnische Datenbank realisiert.

Alle wesentlichen Informationen zu einem Projekt werden in der verfahrenstechnischen Datenbank in einem "Ordner" abgelegt, der als Projekt bezeichnet wird. Zu jedem Projekt 4 können mehrere sogenannte Varianten definiert werden. Hierbei handelt es sich in der Regel um Verfahrensvarianten.

Zu jeder Variante können mehrere Simulationen 5 definiert sein. Beispielsweise kann der Anwender Simulationen 5 für die Minimal-, Maximal- oder Normallast einer Anlage in der verfahrenstechnischen Datenbank hinterlegen.

Ferner erlaubt es die verfahrenstechnische Datenbank verschiedene Varianten abzubilden, z.B. verschiedene Designstudien zu einer Verfahrensvariante zu pflegen (Designdaten 8). Diese beziehen sich immer auf einen einzelnen Apparat bzw. ein einzelnes Planungsobjekt 4. Zur Visualisierung von Daten können pro Variante mehrere Fliessbilder in der verfahrenstechnischen Datenbank abgelegt werden.

In dem Datenmodell der verfahrenstechnischen Datenbank stellt ein Projekt 4 bzw. eine seiner Alternativen, über die die Abbildung der Verfahrensalternativen erfolgt, jeweils eine logische Einheit dar. In der Regel wird eine Projektalternative in ein oder mehreren Fliessbildern graphisch dargestellt, wobei Apparate, Ströme, Wertefelder, Messstellen sowie Annotationen Symbolen im Fliesbild zugeordnet sind. Darüber hinaus können auf einem Fliesbild Apparate- und Stoffstromleisten dargestellt sein. Stoffstromleisten können sich auf eine bestimmte Simulation 5 beziehen.

Insbesondere dient ein Projekt 4 zur Abbildung einer geplanten oder existierenden Anlage mittels in den Implementierungen 6 gespeicherten Apparatedaten, Simulationen 5 und Designdaten 8. Die Stoffdaten 7 beinhalten unter anderem die für eine Simulation erforderlichen physikalischen Kenngrößen der zu verwendenden Substanzen und Materialien.

Zur Ermittlung eines komplexen Korrelationsmusters spezifiziert der Nutzer des Client-Computers 2 zunächst eine entsprechende Matrix. Dies kann durch Auswahl einer Matrix aus einer vorgegebenen Menge von Matrix- Vorlagen oder durch spezifische Definitionen einer Matrix erfolgen. Über den Explorer 9 des Client-Computers 2 werden die Daten von der verfahrenstechnischen Datenbank des Datenbank-Servers 1 elementweise abgefragt, um die Matrix zu generieren. Die Matrix wird in dem Speicher des Datenbank-Servers 1 von dem Explorer 9 abgespeichert.

Nachdem die Matrix 10 vollständig generiert worden ist, wird ein Programm 11 zur Erkennung komplexer Korrelationsmusters gestartet. Die Ergebnisse der Ausführung des Programms 11 werden auf einem Bildschirm 12 ausgegeben. Dies kann in einer graphisch aufbereiteten Form oder textuell in Form von Regeln oder dergleichen erfolgen.

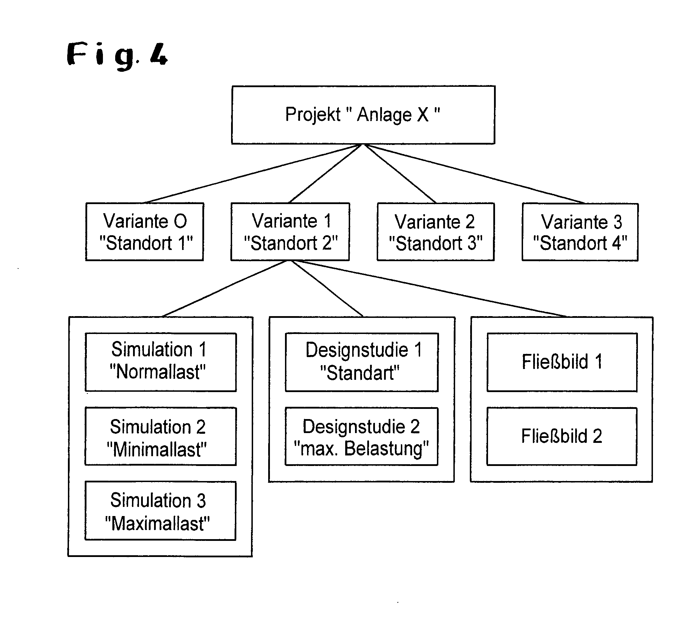

Die Figur 4 zeigt beispielhaft die Struktur eines Projekts 4 (vgl. Figur 3). Einem Projekt "Anlage X" sind verschiedene Varianten 0 bis 3 an verschiedenen Standorten 1 bis 4 zugeordnet. Für jede Variante sind dabei ein oder mehrere Simulationen, Designstudien und/oder Fliessbilder hinterlegt. Dies ist für die Variante 1 am Standort 2 in der Figur 4 dargestellt:

Für die Variante 1 existieren die Simulationen für "Normallast", "Minimallast" und "Maximallast" sowie die Designdaten für den Belastungsfall "Standart" sowie "maximale Belastung". Ferner sind zwei unterschiedliche Fliesbilder für die Variante 1 hinterlegt.

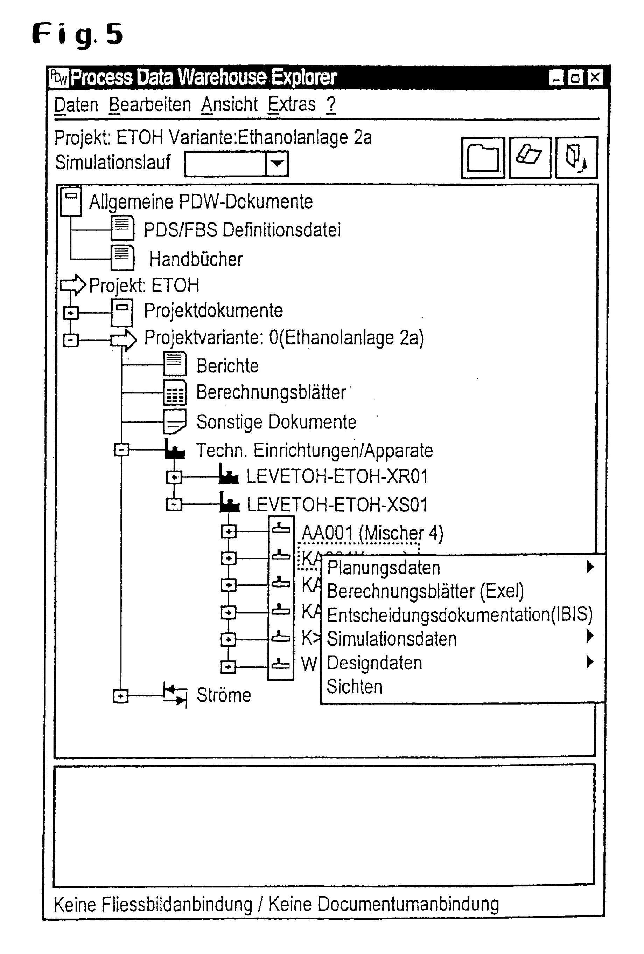

Die Figur 5 zeigt ein Fenster des Explorerprogramms 9. Der Explorer zeigt die Projektstruktur in einer hierarchisch aufgegliederten Art und Weise. Zusätzlich sind in dem Explorer alle Funktionalitäten zur Datenbearbeitung hinterlegt. Der Aufruf der apparate- und stromspezifischen Kontextmenüs kann bei markierten Apparatenamen bzw. Stromnamen in dem Explorer erfolgen.

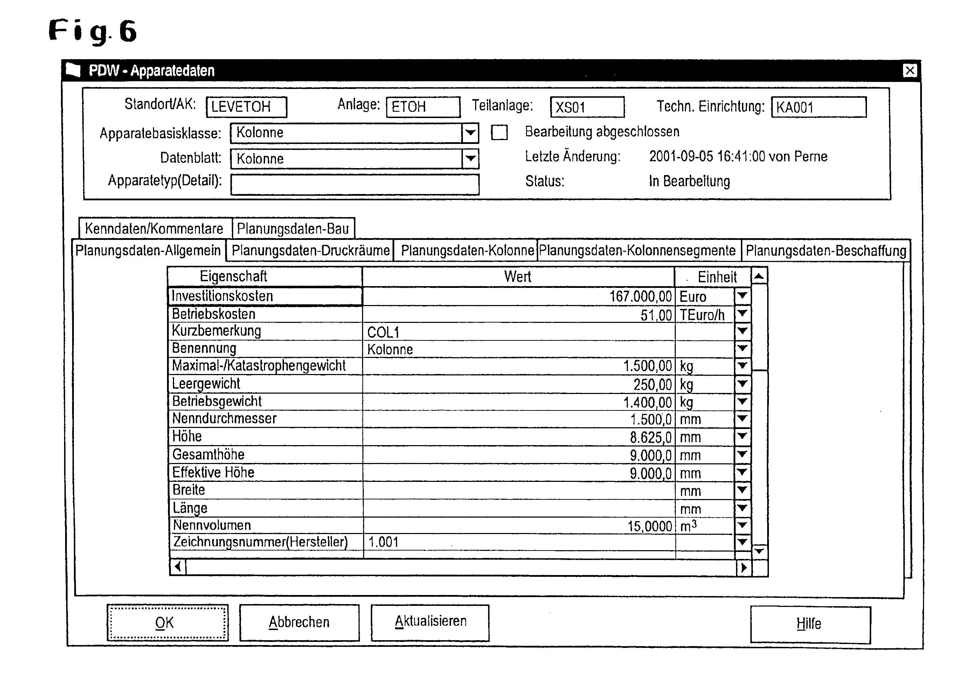

Die Figur 6 zeigt ein Eingabefenster für die Eingabe von Apparatedaten. Der Hintergrund ist der, dass die verfahrenstechnische Datenbank neben Simulationsdaten, d. h. Ergebnisse unterschiedlicher Simulationsprogramme, und Designstudien, auch sogenannte Planungsobjekte verwaltet. Hierbei handelt es sich unter anderem um Apparate und Rohrleitungen. Folgende Apparatetypen werden beispielsweise von der verfahrenstechnischen Datenbank unterstützt:
a) allgemeiner Apparate / Maschine
b) Behälter
c) Reaktor allgemein
d) Abscheider, Filter, Sieb
e) Kolonne
f) Motor
g) Pumpe
h) Rührbehälter, Rührwerk
i) Zentrifuge
j) Verdichter
k) Wärmetauscher
l) Zerkleinerungsmaschine.

Für jeden Apparat sind verschiedene Attribute definiert, die in einem sogenannten Apparatedatendialog gemäß dem Eingabefenster der Figur 6 eingegeben und/oder modifiziert werden können.

Bestimmte Apparate wie Kolonnen, besitzen eine Substruktur, die zur Angabe von Kolonnenböden, Packungen oder besonderen Einbauten genutzt wird.

Weiterhin können Datenblätter zu Planungsobjekten hinterlegt werden, um eine detaillierte Spezifikation vorzunehmen. Über ein entsprechendes Eingabefenster können beispielsweise für eine Kreiskolbenpumpe mit Wellendichtung die Daten eines Datenblatts eingegeben werden, d.h. Betriebsdaten, Ausführungsdaten (Kolbenform etc.) und weitere Daten. Die Einzeldaten des Datenblatts kann der Anwender manuell eingeben oder aus anderen Systemen importieren.

In der verfahrenstechnischen Datenbank werden die Datenelemente eines Apparats in Form von Detail-Daten und dynamischen Attributen verwaltet. Strukturell ist der Aufbau von Detail-Daten und dynamischen Attributen gleich: Sie können frei konfiguriert werden, indem einem Datenelement ein Name, ein Datentyp und gegebenenfalls eine vordefinierte Werteliste zugeordnet werden. Zur Gruppierung von Datenelementen dient eine Klasseneinteilung. Während Detail-Daten zu den verschiedenen Apparatetypen in der verfahrenstechnischen Datenbank vordefiniert sind, können dynamische Attribute bei Bedarf auch vom Anwender angelegt werden.

Die verfahrenstechnische Datenbank unterstützt auch eine detaillierte Strukturierung von Apparaten über Relationen. Damit kann die Zusammengehörigkeit verschiedener Apparate als auch Teilkomponenten eines Apparats beschrieben werden. Beispiel: Ein bestimmter Reaktor besteht etwa aus einem Behälter und zwei Wärmetauschern; eine Kolonne hat eine Anzahl verschiedener Segmente; ein Behälter hat ein oder mehrere Rührwerke, die wiederum Motoren haben usw.

In der verfahrenstechnischen Datenbank können die Ergebnisse der Simulation ganzer Anlagen oder Teilanlagen abgelegt und den realen Apparaten zugeordnet werden. Zum einen werden Modelle der simulierten Apparate, zum anderen Massen-, Wärmeund Leistungsströme beschrieben. Zu Masseströmen werden darüber hinaus detaillierte Informationen über die enthaltenen Stoffe sowie die stattfindenden Reaktionen gespeichert.

Die Figur 7 zeigt eine Anlage 70 mit den Teilanlagen 71, 72, 73, 74 und 75. Die Anlage 70 dient zur Herstellung eines bestimmten chemischen Produkts. Das Produkt wird in einem Reaktor mit Hilfe einer chemischen Reaktion aus drei verschiedenen Einsatzstoffen (Edukten) generiert, die im Folgenden mit A, B und C bezeichnet sind. Diese Edukte werden zum Teil in vorgelagerten Reaktionsschritten generiert. Im Anschluss an die eigentliche Reaktion folgen mehrere Verfahrensschritte, um das Produkt von unerwünschten Nebenprodukten und Verunreinigungen zu befreien. Dies sind die Vor- und Nachkonzentrierung, Destillation sowie Aufbereitung des Produkts.

Die Teilanlage 71 dient zur Eduktgenerierung, die Teilanlage 72 zur Durchführung der eigentlichen Reaktion, die Teilanlage 73 zur Vor- und Nachkonzentrierung, die Teilanlage 74 zur Destillation und die Teilanlage 75 zur Aufbereitung des Produkts.

Die einzelnen Teilanlagen bestehen ihrerseits wiederum aus mehreren verschiedenen Apparaten ( Reaktor, Kolonne, Kondensator, Pumpe, etc.).

In dem hier betrachteten Anwendungsbeispiel der Erfindung soll untersucht werden, welchen Einfluss die Prozessparameter der einzelnen Apparate, insbesondere des Reaktors der Teilanlage 72, auf die Qualität des Produkts haben. Dabei soll ein Vergleich von zwei verschiedenen Varianten des Reaktors vorgenommen werden, die sich in Höhe und Durchmesser unterscheiden.

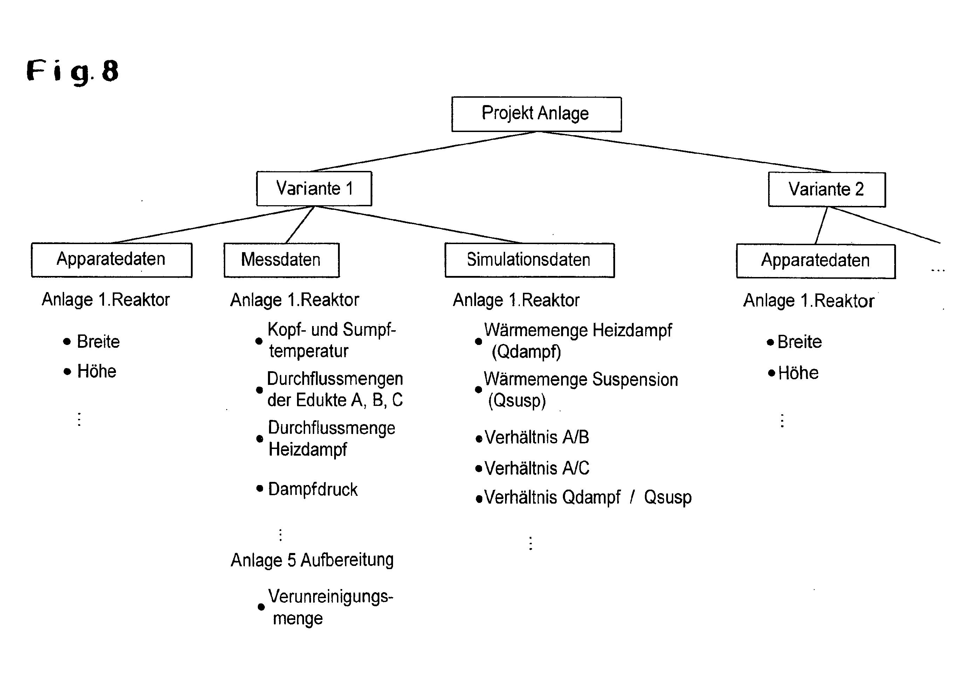

Die entsprechenden Varianten sind teilweise in der Figur 8 dargestellt. Zu der Variante 1 des Projekts der Anlage gehören Apparatedaten, Messdaten und Simulationsdaten. Entsprechende Daten sind auch für die Variante 2 vorhanden.

Für den Reaktor stehen sowohl Apparatedaten, wie Breite und Höhe, als auch Messdaten, wie Kopf- und Sumpftemperatur, Durchflussmengen der Edukte, Durchflussmenge und Dampfdruck des Heizdampfes und weitere Messdaten zur Verfügung. Im Aufbereitungsteil der Anlage sind Messdaten für die Menge an Verunreinigungen im Endprodukt vorhanden (vgl. Figur 8).

Aus den vorhandenen Mess- und Apparatedaten des Reaktors werden mit Hilfe von Simulationsrechnungen neue Daten generiert, die sich im vorliegenden Fall vorteilhaft als zusätzliche Einflussgrößen bei der Korrelations- und Regelanalyse erweisen. Dies sind Wärmemenge des Heizdampfes (Qdampf), Wärmemenge der Suspension (Qsusp) sowie die Verthältnisse
Durchflussmenge Edukt A / Durchflussmenge Edukt B
(im folgenden kurz mit A / B bezeichnet),
Durchflussmenge Edukt A / Durchflussmenge Edukt C
(im folgenden kurz mit A / C bezeichnet), und
Wärmemenge Heizdampf / Wärmemenge Suspension
(im folgenden kurz mit Qdampf / Qsusp bezeichnet).

Ein Ausschnitt der Struktur des Projektes ist in Figur 8 dargestellt. Die Variante 2 unterscheidet sich von Variante 1 durch unterschiedliche Werte bei den Apparatedaten, Messwerten und Simulationsdaten.

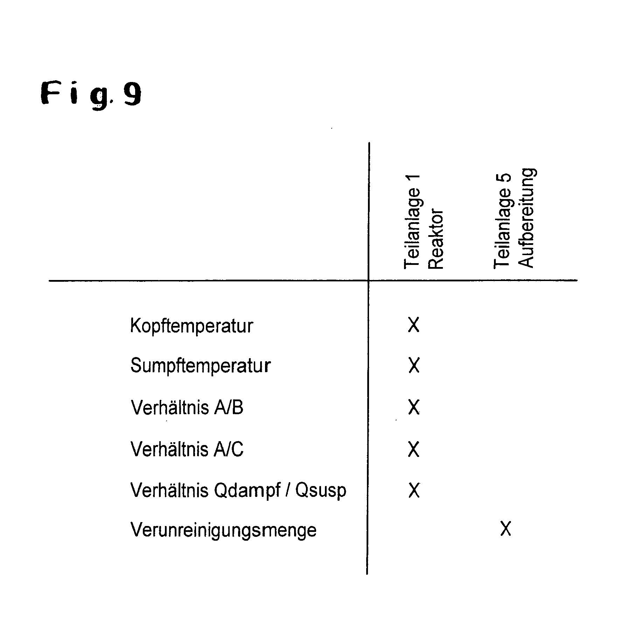

Zur Durchführung der komplexen Korrelations- und Regelanalyse wird im vorliegenden Anwendungsbeispiel die in Figur 9 angegebene Kreuzmatrix definiert. Mit Hilfe eines automatischen Regelsuchverfahrens (Untergruppensuche) sollen neue Zusammenhänge zwischen den gewählten Einflussgrößen (Kopftemperatur, Sumpftemperatur, Verhältnis A/B, Verhältnis A/C, Verhältnis Qdampf/Qsusp) und der gewählten Zielgröße (Verunreinigungsmenge) aufgedeckt werden.

Die Korrelations- und Regelanalyse mit der gegebenen Kreuzmatrix wird dabei parallel für die beiden Verfahrensvarianten durchgeführt, um mögliche Unterschiede der Produktqualität in Abhängigkeit von der Reaktorgeometrie aufzudecken.

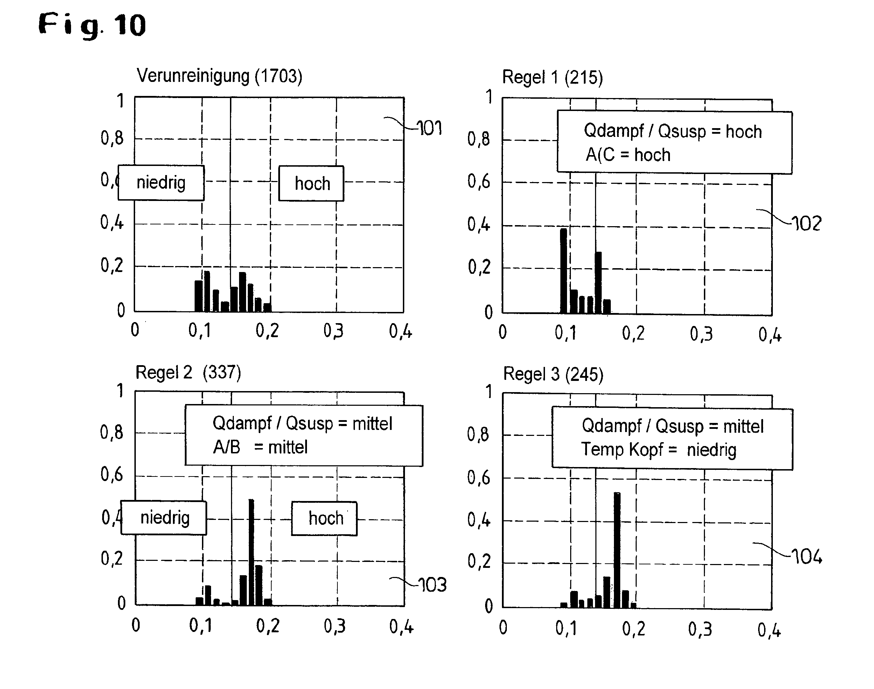

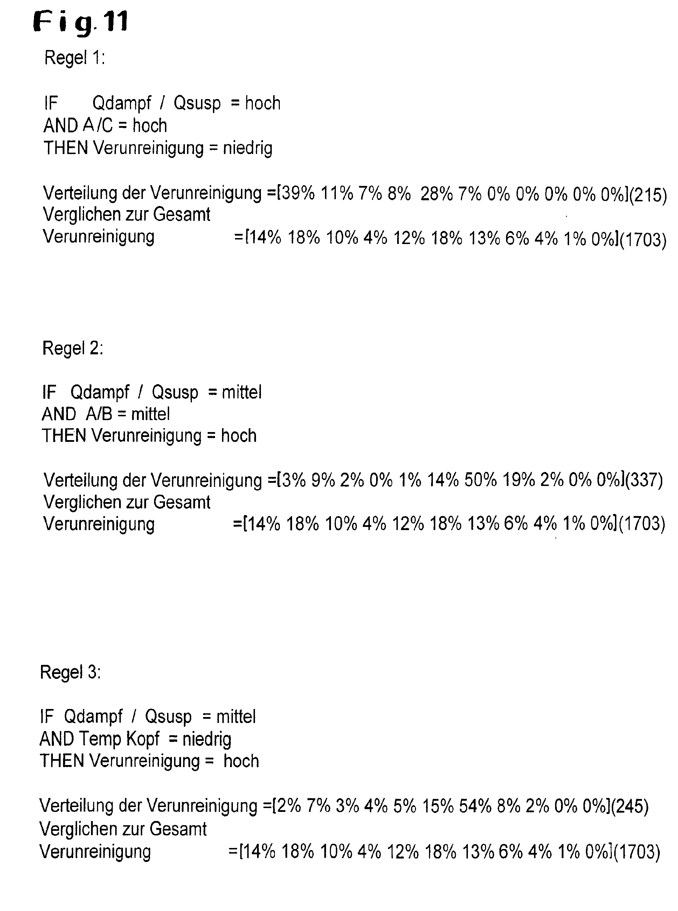

Die gefundenen Zusammenhänge können sowohl in textueller als auch in grafischer Form ausgegeben werden (vgl. Figur 10 und Figur 11).

Die Grafik 101 von Figur 10 zeigt das Histogramm der Qualitätsgröße für die Verfahrensvariante 1. Die Verteilung zwischen niedrigen und hohen Qualitätswerten unter Berücksichtigung aller Datensätze ist in diesem Fall etwa gleich groß ausgeprägt. Als niedrige Verunreinigungen werden im vorliegenden Beispiel Werte kleiner oder gleich als 0.14 angesehen, als hohe Verunreinigungen Werte größer als 0.14. Dieser Schwellenwert kann vom Benutzer beliebig geändert werden.

Die von der automatischen Regelsuche (Untergruppensuche) gefundenen Korrelationsmuster für Verfahrensvariante 1 sind in den Grafiken 102 bis 104 dargestellt. Für bestimmte Kombinationen der Eingangsvariablen ergeben sich signifikante Verschiebungen der Qualitätsgröße in den niedrigen bzw. hohen Wertebereich.

Beispielsweise besagt Regel 3, dass bei einem mittleren Verhältnis der Wärmemengen Qdampf zu Qsusp und einem mittleren Verhältnis der Durchflussmengen A zu B fast ausschließlich hohe Verunreinigungen zu erwarten sind. Die in den Klammern angegebenen Werte bezeichnen dabei jeweils die Anzahl der durch die Regel erfassten Datensätze.

Eine äquivalente textuelle Beschreibung der gefundenen Regeln ist in Figur 11 abgebildet. Dabei wurde bereits ein Klassifizierung der Zielgröße in "niedrig" und "hoch" entsprechend des angegebenen Schwellenwertes vorgenommen.

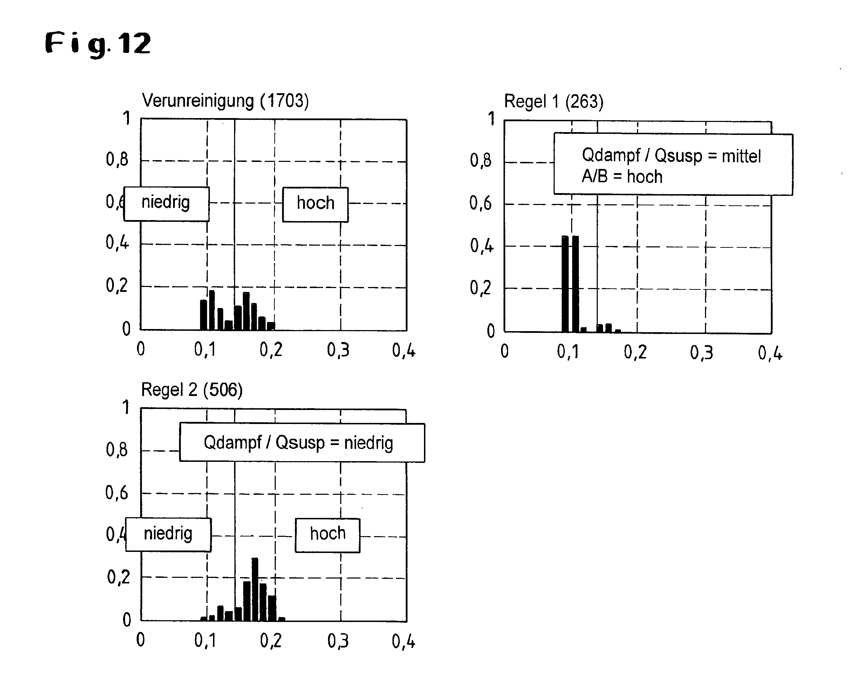

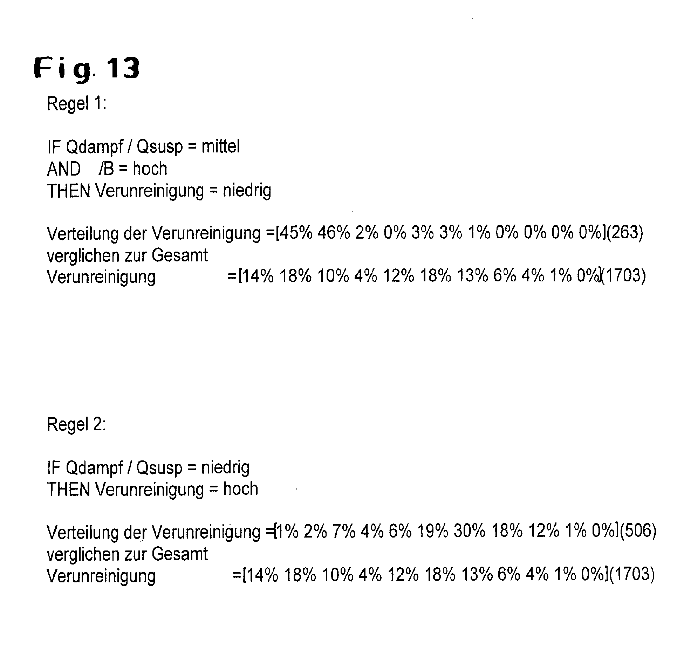

Figur 12 und Figur 13 zeigen die entsprechenden Resultate für die Verfahrensvariante 2, bei der die Reaktorgeometrie, d.h. Höhe und Breite des Reaktors, im Vergleich zur Variante 1 geändert wurden.

Aus dem Vergleich der verschiedenen Korrelationsmuster und Regeln für die beiden Verfahrensvarianten können anschließend Rückschlüsse über die geeignete Reaktorgeometrie gewonnen werden. Im vorliegenden Fall könnte die Auswahl beispielsweise zugunsten von Reaktorvariante 2 ausfallen, da bei dieser eine gute Produktqualität (d.h. wenige Verunreinigungen) mit niedrigerem Energieaufwand im Vergleich zu Reaktorvariante 1 produziert werden kann.

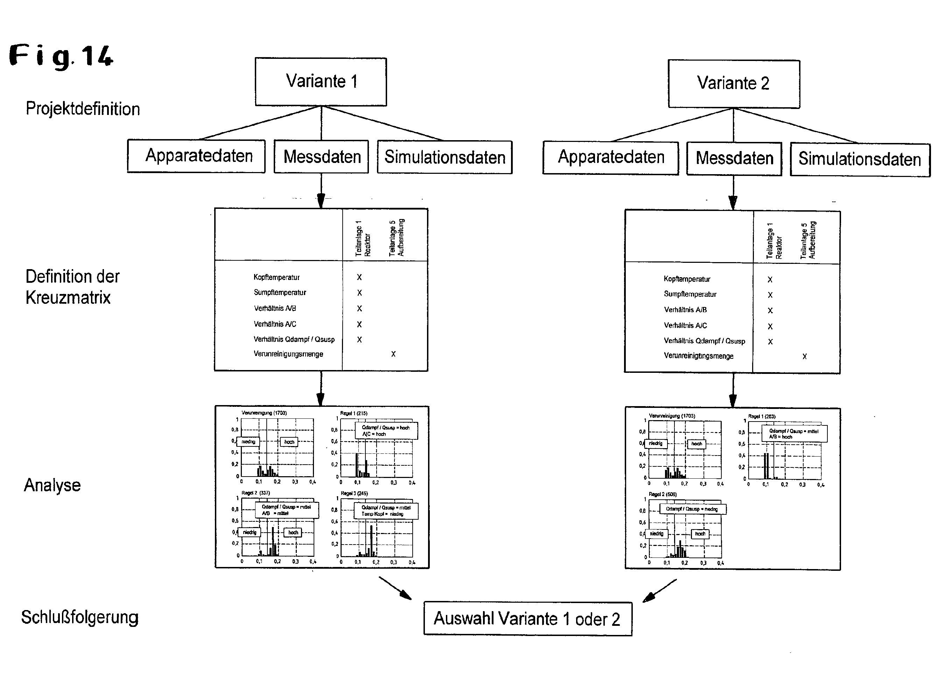

Der Bearbeitungs-Workflow zur automatischen Regelsuche und Ermittlung von komplexen Korrelationsmustern ist übersichtsartig in Figur 14 dargestellt. Zunächst findet also eine Projektdefinition mit verschiedenen Projektvarianten statt. Dies kann beispielsweise in einer der Figur 8 entsprechenden Form erfolgen. Für jede der Varianten des Projekts wird dann eine Kreuzmatrix definiert, die beispielsweise bestimmte Messdaten mit verschiedenen Teilanlagen der betreffenden Variante verknüpft. Die Kreuzmatrix wird dann einer automatischen Analyse unterworfen, die bestimmte Zusammenhänge der Elemente der Kreuzmatrix zutage fördert, beispielsweise in der Form von Regeln. Aus der Gegenüberstellung dieser Regeln kann dann die für den jeweiligen Anwendungsfall günstigste Variante ausgewählt werden.

## Patentansprüche

1. Verfahren zur Ermittlung eines komplexen Korrelationsmusters aus Verfahrens- und Anlagendaten mit folgenden Schritten:
- Spezifizierung einer Matrix, in der jedes Matrixelement einem Element einer Anlage und einer entsprechenden Eigenschaft zugeordnet ist,
- Generierung der Matrix durch eine Datenbankabfrage,
- Automatische Erkennung eines komplexen Korrelationsmusters in der Matrix.

2. Verfahren nach Anspruch 1, bei dem die Verfahrens- und Anlagendaten Daten von zumindest einer ersten und einer zweiten Anlage beinhalten und jedes Matrixelement einer der Anlage eindeutig zugeordnet ist.

3. Verfahren nach Anspruch 1 oder 2, bei dem jedes Matrixelement einem Apparat einer Anlage zugeordnet ist.

4. Verfahren nach Anspruch 1, 2 oder 3, bei dem es sich bei der Eigenschaft um eine physikalische Eigenschaft handelt.

5. Verfahren nach einem der vorhergehenden Ansprüche 1 bis 4, wobei es sich bei der Eigenschaft um eine betriebswirtschaftliche Eigenschaft, insbesondere Kosten, handelt.

6. Verfahren nach einem der vorhergehenden Ansprüche 1 bis 5, bei dem es sich bei der Eigenschaft um eine Qualität handelt.

7. Verfahren nach einem der vorhergehenden Ansprüche 1 bis 6, bei dem die Matrix als Kreuzmatrix ausgebildet ist.

8. Verfahren nach einem der vorhergehenden Ansprüche 1 bis 7, bei dem die Datenbank als OLAP Datenbank ausgebildet ist.

9. Verfahren nach einem der vorhergehenden Ansprüche 1 bis 8, bei dem der Datenbank ein Datenmodell zu Grunde liegt, welches beispielsweise die folgenden Entitäten miteinander verknüpft: Projekte, Simulationen, Implementierungen, Stoffdaten, Designdaten.

10. Verfahren nach einem der vorhergehenden Ansprüche 1 bis 9, bei dem die Datenbank auf einem Datenbank-Server gespeichert ist und die Datenbankabfrage zur Generierung der Matrix von einem Client-Computer erfolgt, wobei vorzugsweise ein Explorer-Programm oder eine graphische Darstellung, z.B. ein Fliessbild, auf dem Client-Computer verwendet wird.

11. Verfahren nach einem der vorhergehenden Ansprüche 1 bis 10 mit einer dynamischen Aktualisierung der in der Datenbank gespeicherten Verfahrensund Anlagendaten.

12. Verfahren nach einem der vorhergehenden Ansprüche 1 bis 11, bei dem ein oder mehrere der folgenden Verfahren für die automatische Erkennung von Korrelationen benutz werden: Cluster-Verfahren, Decision-Trees, Untergruppen-Suche, Fuzzy-Logic, Rough-Sets.

13. Verfahren nach einem der vorhergehenden Ansprüche 1 bis 12, bei dem als Ergebnis der automatischen Erkennung von komplexen Korrelationen eine Regel ausgegeben wird.

14. Verfahren nach einem der vorhergehenden Ansprüche 1 bis 13, bei dem als Ergebnis der automatischen Erkennung von komplexen Korrelationen eine Korrelation zwischen ähnlichen Anlagen und/oder ähnlichen Verfahren auf derselben Anlage ausgegeben wird.

15. Verfahren nach einem der vorhergehenden Ansprüche 1 bis 14 mit einer graphischen Ausgabe der automatisch erkannten komplexen Korrelationen.

16. Computerprogrammprodukt mit computerlesbaren Programmmitteln zur Durchführung eines Verfahrens nach einem der vorhergehenden Ansprüche 1 bis 15, wenn das Programm auf einem Computer, vorzugsweise einem Client-Computer, ausgeführt wird.

17. Computersystem, vorzugsweise Client-Computersystem, mit Mitteln zur Ausführung der Schritte eines Verfahren nach einem der vorhergehenden Ansprüche 1 bis 15.

18. Computersystem nach Anspruch 17, mit einem Datenbankservercomputer zur Speicherung der Datenbank und einem Client-Computer zum Zugriff auf den Datenbank-Servercomputer, wobei der Client-Computer ein Explorer-Programm zur Generierung der Matrix und einen Speicher zur Speicherung der generierten Matrix aufweist sowie ein Programm zur Erkennung komplexer Korrelationsmuster, welches auf den Speicher zugreifen kann.
